# EUROPEAN PATENT SPECIFICATION

(11) **EP 2 647 973 B1**
(45) Date of publication and mention of the grant of the patent: **06.12.2017**
(21) Application number: 12461511.3
(22) Date of filing: 06.04.2012
(51) Int. Cl.: G01K 7/04

(54) **Method of manufacturing temperature sensor and the temperature sensor**
Verfahren zur Herstellung eines Temperatursensors und der Temperatursensor
Procédé de fabrication d'un capteur de température et le capteur de température

(43) Date of publication of application: 09.10.2013
(73) Proprietor: RETECH Spólka z o.o., 39-300 Mielec (PL)
(72) Inventor: Ziarko, Andrzej, PL39-300 Mielec (PL); Ziarko, Krzysztof, PL39-300 Mielec (PL); Ziarko, Boguslaw, 82418 Murnau (DE)
(74) Representative: Sielewiesiuk, Jakub

(56) References cited:
- FR-A1- 2 704 316
- US-A- 3 607 447
- US-A1- 2010 322 286

## Description

The subject of the present invention is a method of manufacturing a temperature sensor assembly and a temperature sensor assembly, especially screwed-in, equipped with a thermocouple, used in industrial devices for temperature measurement and adjustment.

From French patent description No FR2704316 a method of manufacturing a thermocouple is known, where wires are being located in an insulating ring, which has two holes and after that the ends of the wires are clamped with a spheroidal tube, and the rest of the wires is removed.

WO9202794 discloses a method of manufacturing a thermocouple comprising production of an uniform ceramic insulator with at least one axial passageway and a thermoelement in the insulator passageway; creation of a unitary ceramic sheath formed with an insulator-receiving chamber. The thermocouple is practically humidity-proof and, on the whole length, does not include any powdered filling material.

From Polish utility model No Ru 61462 a temperature sensor is known, where a measuring element, together with a section of connecting a wire, is located centrally in a cover, made of plastic, having the shape of cylinder and filled with non-hygroscopic plastic. The temperature sensor has beneficially thickened cover, in the section where the measuring element with terminals of connecting the wire are located.

Another German patent application No DE 199 41 188 describes a sensor which has a guiding element with wires located in a metal outer cylinder. A thermocouple is connected to the end of said wires and located in flowing liquid. A sealing element is located on the whole outer surface of the outer cylincylinder, which is placed directly in an element in the form of a hexagonal solid, with a threaded terminal.

American patent application No US3607447 discloses a thermocouple with wires joined in electrical contact by means of a plug-type junction that may either be insulated from or maintained in electrical contact with the metallic sheath of the thermocouple assembly. The thermocouple wires are electrically joined to each other and to the metallic sheath in a grounded configuration by means of a plurality of tubular housing members that are swaged about and joined in integral physical contact with the ends of the thermocouple elements.

In yet another American patent application No US2010322286 a method of manufacturing a thermocouple is disclosed. The thermocouple in which a sheathed thermocouple having a small outer diameter that is formed by housing, in a metal sheath, a positive-side thermocouple filament and a negative-side thermocouple filament embedded within a powder of an inorganic insulating material, and by forming a temperature sensing point at a tip portion thereof by bonding the tips of the positive-side thermocouple filament and the negative-side thermocouple filament together at the tip portion thereof, is inserted in a protective tube having a large outer diameter so that the tip portion is exposed, in which a portion of the sheathed thermocouple that is exposed from the protective tube is inserted in a protective cylinder having a bottom cover with a hole on a tip side through which the sheathed thermocouple is inserted and having a plurality of through windows, the tip of the sheathed thermocouple is slightly exposed from the bottom cover of the protective cylinder, and the bottom cover of the protective cylinder and the sheathed thermocouple as well as the protective cylinder and a lower portion of the protective tube are welded.

A method of manufacturing a temperature sensor assembly, according to the present invention, comprises the following steps:
a preliminary preparation of thermocouple wires by cutting and removing insulation material;
putting an insulator between the two thermocouple wires;
joining by a bushing the ends of the two thermocouple wires into a point of the thermocouple, wherein the two thermocouple wires are passing along two opposite sites of the insulator;
putting an electric insulation tube with a thermo-conductive paste inside on the lower part of the insulator;
putting a metal tubular housing with a laser welded cover on the electric insulation tube;
mounting a housing of the thermocouple on a threaded bushing of said metal tubular housing and on the head of the insulator, wherein said housing consists of two halves, which are only partially clamped together;
placing the sensor assembly in an injection mould where the housing of the thermocouple is fully clamped;
producing an hexagonal body with vertical brackets around said housing of the thermocouple sensor assembly by injection moulding.

A temperature sensor assembly, according to the present invention, comprises:
a thermocouple having two wires;
a bushing joining the two thermocouple wires;
an insulator;
an electric insulation tube;
a metal tubular housing closed with a laser welded cover and presenting a threaded bushing;
a housing consisting of two halves;
a hexagonal body with vertical brackets;
   wherein
the two thermocouple wires are arranged along two opposite sides of the insulator;
the two thermocouple wires are joined by clamping the bushing onto the point of the thermocouple, outside of the insulator;
the electric insulation tube is filled with a conductive paste and is arranged on the lower part of the insulator;
the electric insulation tube with the insulator is arranged inside the metal tubular housing with a laser welded cover;
the insulator, the electric insulation tube and the threaded bushing are fixed together inside the housing;
the housing is arranged in the hexagonal body with vertical brackets.

Preferably, one end of the insulator has a head with two shelves for the two thermocouple wires, said shelves connect with two parallel guiding channels for the two thermocouple wires.

Preferably, each of the two halves of the housing has circumferential clamping keys inside and a longitudinal securing key against thermocouple twisting. The housing has positioning plates for placing the thermocouple sensor assembly in the injection mould.

Temperature sensor, according to the invention, thanks to his design, and especially thanks to the usage of laser welded cover, has increased reliability and high reaction speed thanks to reduced thermal inertia. Moreover, thanks to shifting the thermocouple in the direction of the end of measuring tube, active penetration of the sensor in measured media is increased. Laser welding increases the cleanliness of measuring tube and reduces labor demand. Usage of preliminary dived thermocouple housing reduces labor demand for the temperature sensor assembly by elimination of threading the cables and separate operation of cable clamping, which now takes place during injection moulding of the hexagonal body in the injection mould. With the wide tolerance of the cable diameter, appropriate clamping is used, making it impossible to pull it out from the sensor or turning it, what increases the sensor reliability.

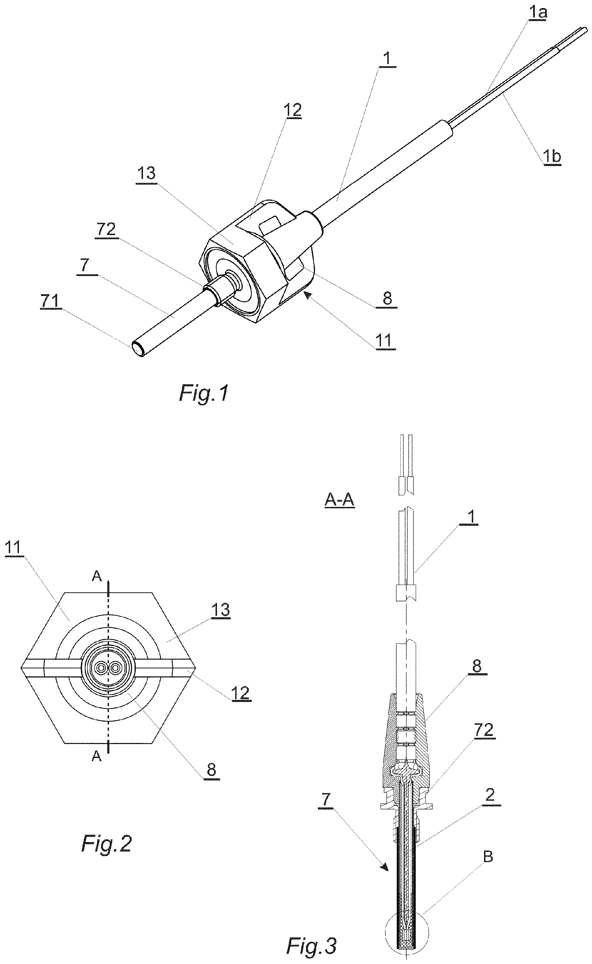

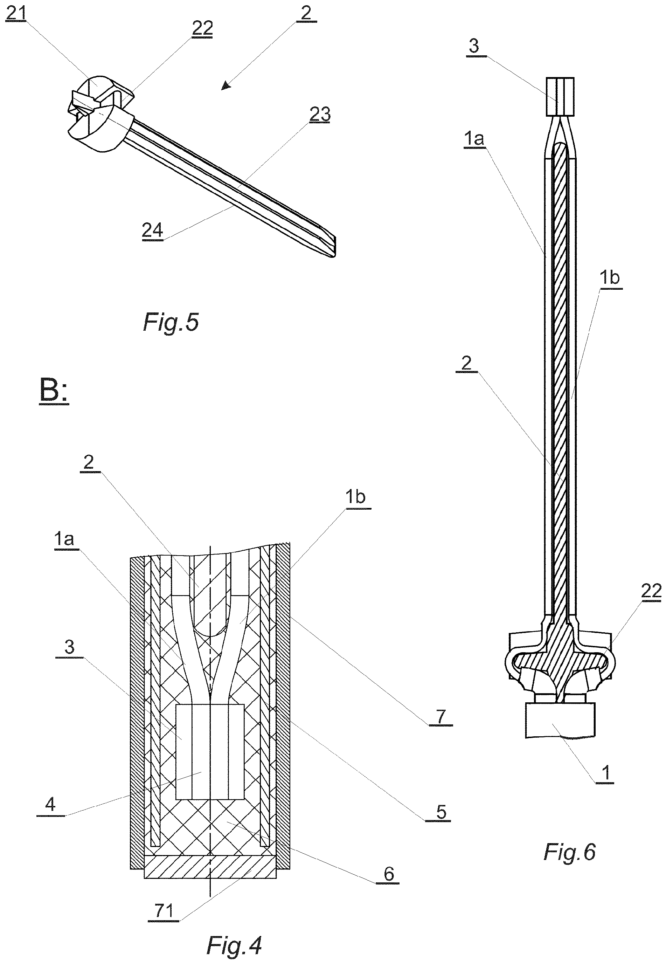

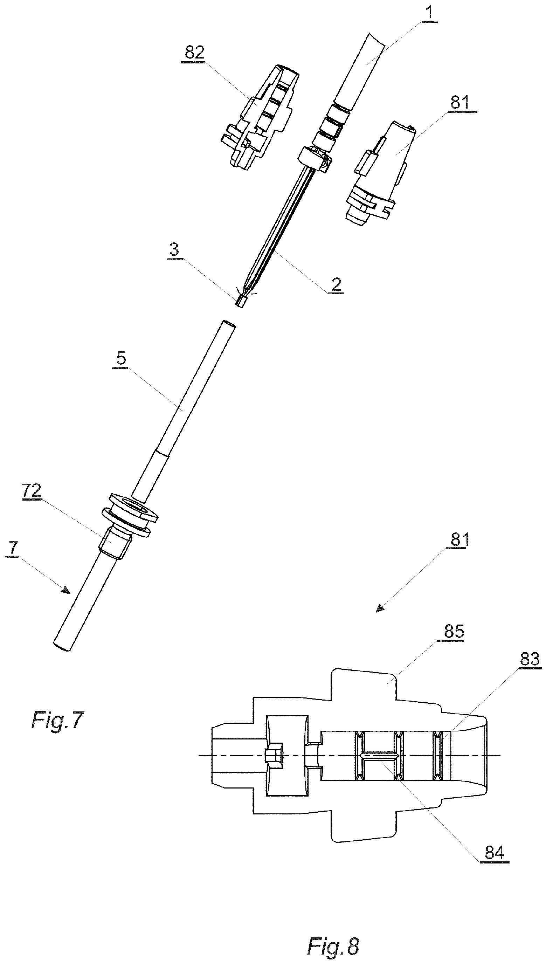

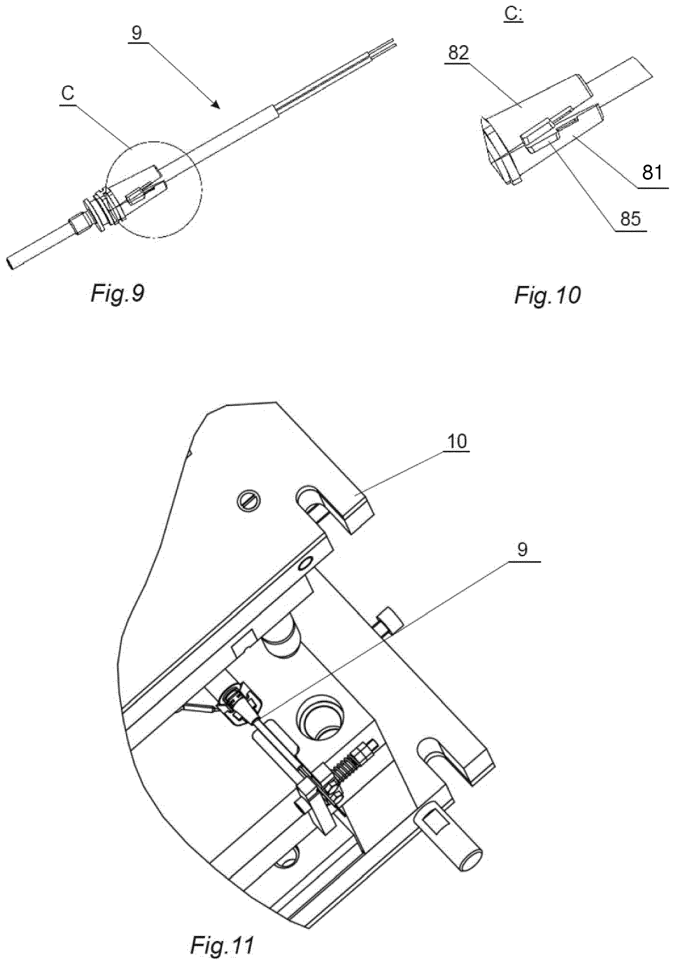

These and other characteristics of the invention will be clear from the following description of a preferential form of embodiment, given as a non-restrictive example, with reference to the attached drawings wherein: fig. 1 - shows the sensor in 3D view, fig. 2 - the top view, fig. 3 - cross section of sensor from the fig. 2, fig. 4 - view B from the fig. 3, fig. 5 - 3D view of insulator, fig. 7 - disintegrated view of sensor, fig. 8 - top view of thermocouple cover, fig. 9 - 3D view of sensor assembly, fig. 10 - view C from fig. 9, fig. 10 - 3D view of injection mould with sensor assembly.

In one of the preferred embodiment of the present invention, inside the metal tubular housing 7 closed with the laser welded cover 71, the electric insulation tube 5 with the lower part of the insulator 2 is arranged. The electric insulation tube 5 and the insulator 2 with the threaded bushing 72 are fixed together inside the housing 1 of the thermocouple 1. The housing 8 consists of the two symmetrical halves 81, 82. Inside the electric insulation tube 5 filled with the conductive paste, in the guiding channels 23 of the insulator 2 along the two opposite sides of the insulator, the two thermocouple wires 1a, 1b are placed. The two thermocouple wires 1a, 1b are clamped outside of the insulator 2 by the bushing 3 into the point 4 of the thermocouple 1. The housing 8 of the thermocouple 1 is arranged in the body 11 having the hexagonal part 13 with vertical brackets 12. The insulator 2 has on its one end the head 21 with cut out shelves 22 for placing the wires 1a, 1b of the thermocouple 1. The shelves 22 pass into two parallel guiding channels 23 for wires 1a, 1b of the thermocouple 1. Each half 81,82 of the housing 8 has circumferential clamping keys 83 inside and the longitudinal locking key 84 protecting the thermocouple 1 against twisting. The housing 8 has positioning plates 85 for placing the temperature sensor assembly 9 in the injection mould 10.

After preliminary preparation of the thermocouple wires 1a, 1b by cutting and removing insulation material, putting the insulator 2 between the two thermocouple wires 1a, 1b and connecting the ends of the two thermocouple wires 1a, 1b by the bushing 3 into the point 4 of the thermocouple 1, on the lower part of the insulator 2, the electric insulation tube 5 filled with the thermo-conductive paste 6 inside is being put on. After that the metal tubular housing 7 with laser welded cover 71 is being put on the electric insulation tube 5. Next, the housing 8 of the thermocouple 1 consisting of two halves 81, 82 which are only partially closed, is mounted on the electric insulation tube 5 fixed in upper part of metal housing 7 and on the upper part of the insulator 2. The temperature sensor assembly 9 prepared in this way is then placed in the injection mould 10 where the housing 8 of the thermocouple 1 is fully clamped and the hexagonal body 11 with the vertical plates 12 is produced during injection moulding.

## Claims

1. A method of manufacturing a temperature sensor assembly comprising:
a preliminary preparation of thermocouple wires (1a, 1b) by cutting and removing insulation material;
putting an insulator (2) between the two thermocouple wires (1a, 1b);
joining by a bushing (3) the ends of the two thermocouple wires (1a, 1b) into a point of the thermocouple (1), wherein the two thermocouple wires (1a, 1b) are passing along two opposite sites of the insulator (2);
putting an electric insulation tube (5) with a thermo-conductive paste (6) inside on the lower part of the insulator (2);
putting a metal tubular housing (7) with a laser welded cover on the electric insulation tube (5);
mounting a housing (8) of the thermocouple (1) on a threaded bushing (72) of said metal tubular housing (7) and on the head (21) of the insulator (2), wherein said housing (8) consists of two halves (81, 82), which are only partially clamped together;
placing the sensor assembly (9) in an injection mould (10) where the housing (8) of the thermocouple (1) is fully clamped;
producing an hexagonal body (11) with vertical brackets (12) around said housing (8) of the thermocouple sensor assembly (9) by injection moulding.

2. A temperature sensor assembly comprising:
a thermocouple (1) having two wires (1a, 1b);
a bushing (3) joining the two thermocouple wires (1a, 1b);
an insulator (2);
an electric insulation tube (5);
a metal tubular housing (7) closed with a laser welded cover (71) and presenting a threaded bushing (72);
a housing (8) consisting of two halves (81, 82);
a hexagonal body (11) with vertical brackets (12);
wherein
the two thermocouple wires (1a, 1b) are arranged along two opposite sides of the insulator (2);
the two thermocouple wires (1a, 1b) are joined by clamping the bushing (3) onto the point of the thermocouple (1), outside of the insulator (2);
the electric insulation tube (5) is filled with a conductive paste (6) and is arranged on the lower part of the insulator (2);
the electric insulation tube (5) with the insulator is arranged inside the metal tubular housing (7) with a laser welded cover (71);
the insulator (2), the electric insulation tube (5) and the threaded bushing (72) are fixed together inside the housing (8);
the housing (8) is arranged in the hexagonal body (11) with vertical brackets (12).

3. A temperature sensor assembly according to claim 2, wherein one end of the insulator (2) has a head (21) with two shelves (22) for the two thermocouple wires (1a, 1b), said shelves (22) connect with two parallel guiding channels (23) for the two thermocouple wires (1a, 1b).

4. A temperature sensor assembly according to claim 2, wherein each of the two halves (81, 82) of the housing (8) has circumferential clamping keys (83) inside and a longitudinal securing key (84) against thermocouple (1) twisting.

5. A temperature sensor assembly according to claim 4, wherein the housing (8) has positioning plates (85) for placing the thermocouple sensor assembly (9) in the injection mould (10).

## Patentansprüche

1. Das die folgenden Tätigkeiten umfassende Herstellungsverfahren der Temperatursensor-Baugruppe:
vorläufiges Vorbereiten der Thermoelementdrähte (1a, 1b) durch das Zuschneiden und Entfernen des Isoliermaterials;
Anordnen eines Isolators (2) zwischen den beiden Thermoelementdrähten (1a, 1b);
Verbinden von zwei Enden der Thermoelementdrähte (1a, 1b) mit Hilfe von einer Hülse (3) in eine Stelle des Thermoelements (1), wobei zwei Thermoelementdrähte (1a, 1b) an zwei einander gegenüberliegenden Seiten des Isolators (2) verlaufen;
Aufsetzen eines mit Wärmeleitpaste (6) gefüllten Elektroisolierrohrs (5) auf den unteren Teil des Isolators (2);
Anbringen eines rohrförmigen Metallgehäuses (7) mit einer lasergeschweißten Abdeckung auf das Elektroisolierrohr (5);
Montieren des Gehäuses (8) des Thermoelements (1) an der Gewindehülse (72) des rohrförmigen Metallgehäuses (7) und am Kopf (21) des Isolators (2), wobei das Gehäuse (8) aus zwei Hälften (81, 82) besteht, die nicht vollständig zueinander festgeklemmt sind;
Platzieren der Sensor-Baugruppe (9) in einer Spritzgießform (10), in der das Gehäuse (8) des Thermoelements (1) vollständig festgeklemmt ist;
Herstellen eines sechseckigen Körpers (11) mit vertikalen Befestigungselementen (12) um das Gehäuse (8) der Thermoelementsensor-Baugruppe (9) herum durch das Spritzgießen.

2. Temperatursensor-Baugruppe, zu der die folgenden Elemente gehören:
Thermoelement (1) mit zwei Drähten (1a, 1b);
Hülse (3), die zwei Thermoelementdrähte (1a, 1b) verbindet;
Isolator (2);
Elektroisolierrohr (5);
rohrförmiges Metallgehäuse (7) mit einer Gewindehülse (72), geschlossen mit einer lasergeschweißten Abdeckung (71);
Gehäuse (8), das aus zwei Hälften (81, 82) besteht;
sechseckiger Körper (11) mit vertikalen Befestigungselementen (12),
wobei
zwei Thermoelementdrähte (1a, 1b) an zwei einander gegenüberliegenden Seiten des Isolators (2) verlaufen;
zwei Thermoelementdrähte (1a, 1b) miteinander durch das Klemmen der Hülse in der Stelle des Thermoelements (1) außerhalb des Isolators (2) verbunden sind;
das Elektroisolierrohr (5) mit Wärmeleitpaste (6) gefüllt ist und im unteren Teil des Isolators (2) angeordnet ist;
das Elektroisolierrohr (5) mit dem Isolator im rohrförmigen Metallgehäuse (7) mit einer lasergeschweißten Abdeckung (71) angeordnet ist;
der Isolator (2), das Elektroisolierrohr (5) und die Gewindehülse (72) innerhalb des Gehäuses (8) verbunden sind;
das Gehäuse (8) im sechseckigen Körper (11) mit vertikalen Befestigungselementen (12) angeordnet ist.

3. Temperatursensor-Baugruppe nach Anspruch 2, in der ein Ende des Isolators (2) einen Kopf (21) mit zwei Fächern (22) zum Anordnen von zwei Thermoelementdrähten (1a, 1b) aufweist, und diese Fächer (22) mit zwei parallelen Führungskanälen (23) für zwei Thermoelementdrähte (1a, 1b) verbunden sind.

4. Temperatursensor-Baugruppe nach Anspruch 2, in der jede von zwei Hälften (81, 82) des Gehäuses (8) innenliegende, umlaufende Klemmkeile (83) und einen Längskeil (84) gegen Verdrehung des Thermoelements (1) aufweist.

5. Temperatursensor-Baugruppe nach Anspruch 2, in der das Gehäuse (8) Positionierungsplatten (85) zum Anordnen der Thermoelementsensor-Baugruppe (9) in der Spritzgießform (10) aufweist.

## Revendications

1. Une méthode de fabrication de l'ensemble de capteur de température comprenante :
une préparation préliminaire des conducteurs de thermocouple (1a, 1b) en coupant et en enlevant l'isolation ;
le placement de l'isolant (2) entre deux conducteurs de thermocouple (1a, 1b) ;
la connexion de deux extrémités des conducteurs de thermocouple (1a, 1b) à l'aide du manchon (3) dans le point du thermocouple (1), où les deux conducteurs de thermocouple (1a, 1b) passent sur les côtés opposés de l'isolant (2) ;
la mise d'un tube d'isolation électrique (5) rempli d'une pâte thermoconductrice (6) sur la partie inférieure de l'isolant (2) ;
la mise d'une protection tubulaire métallique (7) avec un couvercle soudé au laser sur le tube d'isolation électrique (5) ;
le montage d'un boîtier (8) du thermocouple (1) sur un raccord fileté (72) d'une protection tubulaire métallique précitée (7) et sur la tête (21) de l'isolant (2), où le boîtier précité (8) se compose de deux moitiés (81, 82) qui ne sont pas serrées complètement l'une sur l'autre ;
le placement de l'ensemble du capteur (9) dans un moule à injection (10) dans lequel le serrate complète du boîtier (8) du thermocouple (1) a lieu ;
la création d'un corps hexagonal (11) avec les supports verticaux (12) autour du boîtier précité (8) de l'ensemble du capteur de thermocouple (9) par une méthode de moulage à injection.

2. L'ensemble du capteur de température comprenant :
un thermocouple (1) avec deux conducteurs (1a, 1b) ;
un manchon (3) reliant les deux conducteurs de thermocouple (1a, 1b) ;
l'isolant (2) ;
un tube d'isolation électrique (5) ;
une protection tubulaire métallique (7) avec un raccord fileté (72), fermé par un couvercle soudé au laser (71) ;
un boîtier (8) constitué de deux moitiés (81, 82) ;
un corps hexagonal (11) avec des supports verticaux (12) ;
où
les deux conducteurs de thermocouple (1a, 1b) passent sur les côtés opposés de l'isolant (2) ;
les deux conducteurs de thermocouple (1a, 1b) sont reliés par le manchon serré sur le point du thermocouple (1) à l'extérieur de l'isolant (2) ;
le tube d'isolation électrique (5) est rempli d'une pâte thermoconductrice (6) et se trouve sur la partie inférieure de l'isolant (2) ;
le tube d'isolation électrique (5) avec un isolant est mis dans une protection tubulaire métallique (7) avec un couvercle soudé au laser (71) ;
l'isolant (2), le tube d'isolation électrique (5) et le raccord fileté (72) sont assemblés à l'intérieur du boîtier (8) ;
le boîtier (8) est mis dans le corps hexagonal (11) avec les supports verticaux (12).

3. L'ensemble du capteur de température selon la revendication 2 où une extrémité de l'isolant (2) possède une tête (21) avec deux étagères (22) pour disposer les deux conducteurs de thermocouple (1a, 1b), où ces étagères (22) sont reliées par deux canaux parallèles de guidage (23) pour les deux conducteurs de thermocouple (1a, 1b).

4. L'ensemble du capteur de température selon la revendication 2 où chacune des deux moitiés (81, 82) du boîtier (8) possède des clavettes de serrage circonférentielles (83) et une clavette longitudinale (84) qui protège le thermocouple (1) contre la torsion.

5. L'ensemble du capteur de température selon la revendication 2 où le boîtier (8) possède des plaques de positionnement (85) pour placer l'ensemble de capteur de thermocouple (9) dans le moule à injection (10).
